# EUROPEAN PATENT SPECIFICATION

(11) **EP 3 409 118 B1**
(45) Date of publication and mention of the grant of the patent: **11.01.2023**
(21) Application number: 17744303.3
(22) Date of filing: 26.01.2017
(51) Int. Cl.: A01N 53/06, A01N 25/18, A01P 7/02, A01P 7/04, A01M 1/20

(54) **AQUEOUS PEST CONTROL LIQUID**
WÄSSRIGE SCHÄDLINGSBEKÄMPFUNGSFLÜSSIGKEIT
LIQUIDE ANTIPARASITAIRE AQUEUX

(30) Priority: 29.01.2016 JP 2016015248
(43) Date of publication of application: 05.12.2018
(73) Proprietor: Sumitomo Chemical Company, Limited, Tokyo 103-6020 (JP)
(72) Inventor: SHIMATA, Tomoki, Takarazuka-shi Hyogo 665-8555 (JP)
(74) Representative: Marks & Clerk LLP
(86) International application number: PCT/JP2017/002671
(87) International publication number: WO 2017/131073

(56) References cited:
- EP-A1- 0 579 245
- DE-A1- 2 738 878
- JP-A- H08 310 907
- JP-A- H09 104 844
- JP-A- H09 104 844
- JP-A- 2001 247 405
- JP-A- 2006 273 743
- JP-A- 2010 088 427
- JP-A- 2010 088 427
- JP-A- 2012 087 087
- JP-A- 2012 176 946
- JP-A- 2012 176 947
- JP-B2- 5 243 373
- US-A- 4 439 415
- US-A- 5 645 845
- US-A1- 2013 303 610
- "SHIBUYA INDEX Kenkyukai", SHIBUYA INDEX, 25 January 2014 (2014-01-25), pages 26-27, XP009513614, Daihyo

## Description

### [Technical Field]

The present invention relates to an aqueous pest control liquid.

### [Background Art]

As a pest control liquid, an aqueous pest control liquid has been used with due consideration to the improvement of safety for fire and the environment. For example, Patent Document 1 describes an aqueous pest control liquid containing a pyrethroid compound, a glycol ether and water. Patent Document 2 describes vaporisable liquids comprising a pyrethroid compound and organic solvents.

### [Prior Art Document]

### [Patent Document]

[Patent Document 1] JP-A-2012-176946 (US2013/303610 A1)
Patent Document 2] JP-A-2010-088427 (JP5243373B)

### [Summary of the Invention]

### [Problems to Be Solved by the Invention]

An object of the present invention is to provide an aqueous pest control liquid that can volatilize a fixed amount of pest control component for a long period of time.

### [Solution to Problem]

As a result of studying an aqueous pest control liquid, the present inventor has found that the above problem is solved by an aqueous pest control liquid containing a specific pyrethroid compound, an ester compound having a specific vapor pressure and a substituent, a glycol ether and water, thereby reaching the present invention.

More specifically, the present invention is as described below.
[1] An aqueous pest control liquid including a pyrethroid compound represented by formula (1), 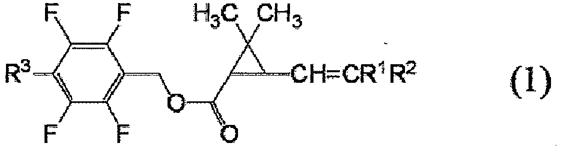 wherein R¹ and R² are the same or different and represent a hydrogen atom, a methyl group, a trifluoromethyl group or a chlorine atom, and R³ represents a hydrogen atom, a methyl group or a methoxymethyl group,
   an ester compound having a vapor pressure at 25°C by Donovan method of 1 × 10⁻¹⁰ to 1 × 10⁻⁴ mmHg and one or more (C4-C12 alkoxy)carbonyl groups, a glycol ether and water, wherein the content of the pyrethroid compound represented by formula (1) is 0.01 to 5% by weight based on the entire aqueous pest control liquid, the content of the ester compound having a vapor pressure at 25°C by Donovan method of 1 × 10⁻¹⁰ to 1 × 10⁻⁴ mmHg and one or more (C4-C12 alkoxy)carbonyl groups is 0.01 to 5% by weight based on the entire aqueous pest control liquid, the content of the glycol ether is 10 to 60% by weight based on the entire aqueous pest control liquid, and the content of water is 30 to 85% by weight based on the entire aqueous pest control liquid.
[2] The aqueous pest control liquid according to [1], wherein the content of the pyrethroid compound represented by formula (1) is 0.01 to 5% by weight based on the entire aqueous pest control liquid, the content of the ester compound having a vapor pressure at 25°C by Donovan method of 1 × 10⁻¹⁰ to 1 × 10⁻⁴ mmHg and one or more (C4-C12 alkoxy)carbonyl groups is 0.01 to 5% by weight based on the entire aqueous pest control liquid, the content of the glycol ether is 10 to 50% by weight based on the entire aqueous pest control liquid, and the content of water is 40 to 85% by weight based on the entire aqueous pest control liquid.
[3] The aqueous pest control liquid according to any one of [1] and [2], wherein the ester compound having a vapor pressure at 25°C by Donovan method of 1 × 10⁻¹⁰ to 1 × 10⁻⁴ mmHg and one or more (C4-C12 alkoxy)carbonyl groups is one or more kinds selected from the group consisting of diisodecyl phthalate, di(2-ethylhexyl) phthalate, diisodecyl adipate, di(n-octyl) sebacate, diisononyl adipate, di(2-ethylhexyl) sebacate, di(2-ethylhexyl) 1,10-decanedicarboxylate, dioctyl adipate, di(n-butyl) sebacate, tri(n-butyl) O-acetylcitrate, di(2-ethylhexyl) maleate, and tri(2-ethylhexyl) trimellitate.
[4] The aqueous pest control liquid according to any one of [1] to [3], wherein the glycol ether is one or more kinds selected from the group consisting of ethylene glycol monobutyl ether, diethylene glycol monobutyl ether, propylene glycol monomethyl ether, propylene glycol monoethyl ether, dipropylene glycol monopropyl ether, tripropylene glycol monopropyl ether, and propylene glycol monopropyl ether.
[5] The aqueous pest control liquid according to any one of [1] to [4], further containing a glycol, wherein the glycol is one or more kinds selected from the group consisting of ethylene glycol, diethyleneglycol, triethylene glycol, propylene glycol, dipropylene glycol, 1,3-butylene glycol, polyethylene glycol, tripropylene glycol, tetraethylene glycol, tetrapropylene glycol and polypropylene glycol, and the content of the glycol is 1 to 45% by weight based on the entire aqueous pest control liquid.
[6] The aqueous pest control liquid according to any one of [1] to [5], wherein the pyrethroid compound represented by formula (1) is one or more kinds selected from the group consisting of [2,3,5,6-tetrafluoro-4-(methoxymethyl)phenyl]methyl=2,2-dim ethyl-3-(1-propenyl)cyclopropane carboxylate, [2,3,5,6-tetrafluoro-4-methylphenyl]methyl=2,2-dimethyl-3-( 1-propenyl)cyclopropane carboxylate, (2,3,5,6-tetrafluorophenyl)methyl=3-(2,2-dichlorovinyl)-2,2 -dimethylcyclopropane carboxylate, [2,3,5,6-tetrafluoro-4-(methoxymethyl)phenyl]methyl=3-(2,2-dichlorovinyl)-2,2-dimethylcyclopropane carboxylate, [2,3,5,6-tetrafluoro-4-(methoxymethyl)phenyl]methyl=2,2-dim ethyl-3-(2-methyl-1-propenyl)cyclopropane carboxylate, and [2,3,5,6-tetrafluoro-4-(methoxymethyl)phenyl]methyl=3-(3,3, 3-trifluoro-1-propenyl)-2,2-dimethylcyclopropane carboxylate.
[7] A method for controlling pests which includes vaporizing the aqueous pest control liquid as defined in any one of [1] to [6] into the atmosphere by heating.

### [Effect of the Invention]

The aqueous pest control liquid of the present invention is used, whereby a fixed amount of pest control component can be volatilized for a long period of time, for example, 50 days or more.

### [Brief Description of the Drawings]

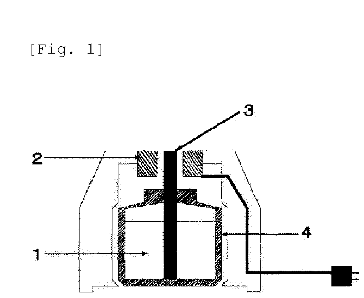

[Fig. 1] Fig. 1 is a schematic view showing an example of heat transpiration apparatus.

### [Mode for Carrying out the Invention]

The aqueous pest control liquid of the present invention (hereinafter, referred to as the control liquid of the present invention) contains a pyrethroid compound represented by formula (1) 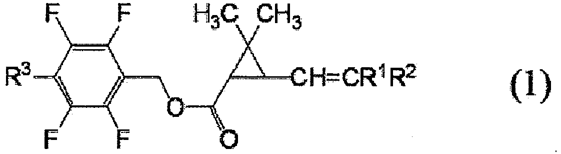 wherein R¹ and R² are the same or different and represent a hydrogen atom, a methyl group, a trifluoromethyl group or a chlorine atom, and R³ represents a hydrogen atom, a methyl group or a methoxymethyl group,
an ester compound having a vapor pressure at 25°C by Donovan method of 1 × 10⁻¹⁰ to 1 × 10⁻⁴ mmHg and one or more (C4-C12 alkoxy)carbonyl groups, a glycol ether, and water.

Specific examples of the pyrethroid compound represented by formula (1) include [2,3,5,6-tetrafluoro-4-(methoxymethyl)phenyl]methyl=2,2-dim ethyl-3-(1-propenyl)cyclopropane carboxylate, [2,3,5,6-tetrafluoro-4-methylphenyl]methyl=2,2-dimethyl-3-( 1-propenyl)cyclopropane carboxylate, (2,3,5,6-tetrafluorophenyl)methyl=3-(2,2-dichlorovinyl)-2,2 -dimethylcyclopropane carboxylate, [2,3,5,6-tetrafluoro-4-(methoxymethyl)phenyl]methyl=3-(2,2-dichlorovinyl)-2,2-dimethylcyclopropane carboxylate, [2,3,5,6-tetrafluoro-4-(methoxymethyl)phenyl]methyl=2,2-dim ethyl-3-(2-methyl-1-propenyl)cyclopropane carboxylate, and [2,3,5,6-tetrafluoro-4-(methoxymethyl)phenyl]methyl=3-(3,3, 3-trifluoro-1-propenyl)-2,2-dimethylcyclopropane carboxylate. These compounds are, for example, compounds described in JP-A-2000-63329, JP-B-2647411, JP-A-S57-123146, JP-A-2001-11022, JP-A-H11-222463, JP-A-2002-145828 and WO2010/043122, and can be produced by the methods described in the patent publications.

The pyrethroid compound represented by formula (1) may have an isomer derived from two asymmetric carbon atoms present on the cyclopropane ring, and an isomer derived from a double bond, and those containing active isomers in an arbitrary ratio can be used for the present invention.

Also, in the control liquid of the present invention, one or more kinds of the pyrethroid compounds represented by formula (1) can be used.

In addition, in the control liquid of the present invention, among the above pyrethroid compounds, [2,3,5,6-tetrafluoro-4-(methoxymethyl)phenyl]methyl=2,2-dim ethyl-3-(1-propenyl)cyclopropane carboxylate, [2,3,5,6-tetrafluoro-4-methylphenyl]methyl=2,2-dimethyl-3-( 1-propenyl)cyclopropane carboxylate, (2,3,5,6-tetrafluorophenyl)methyl=3-(2,2-dichlorovinyl)-2,2 -dimethylcyclopropane carboxylate, [2,3,5,6-tetrafluoro-4-(methoxymethyl)phenyl]methyl=3-(2,2-dichlorovinyl)-2,2-dimethylcyclopropane carboxylate, [2,3,5,6-tetrafluoro-4-(methoxymethyl)phenyl]methyl=2,2-dim ethyl-3-(2-methyl-1-propenyl)cyclopropane carboxylate and [2,3,5,6-tetrafluoro-4-(methoxymethyl)phenyl]methyl=3-(3,3, 3-trifluoro-1-propenyl)-2,2-dimethylcyclopropane carboxylate are preferably used, and [2,3,5,6-tetrafluoro-4-(methoxymethyl)phenyl]methyl=2,2-dim ethyl-3-(1-propenyl)cyclopropane carboxylate and [2,3,5,6-tetrafluoro-4-(methoxymethyl)phenyl]methyl=2,2-dim ethyl-3-(2-methyl-1-propenyl)cyclopropane carboxylate are more preferably used.

The content of the pyrethroid compound represented by formula (1) in the control liquid of the present invention is 0.01 to 5% by weight, preferably 0.05 to 4% by weight, further preferably 0.1 to 3% by weight, and particularly preferably 0.1 to 1% by weight, based on the entire control liquid of the present invention.

The ester compound used in the control liquid of the present invention has a vapor pressure at 25°C by Donovan method of 1 × 10⁻¹⁰ to 1 × 10⁻⁴ mmHg and one or more (C4-C12 alkoxy) carbonyl groups . The Donovan method refers to a method reported by Stephen F. Donovan (New method for estimating vapor pressure by the use of gas chromatography: Journal of Chromatography A. 749 (1996) 123-129). The ester compound preferably has a vapor pressure at 25°C by Donovan method of 1 × 10⁻⁸ to 1 × 10⁻⁵ mmHg and may have one or more ester groups, in addition to one or more (C4-C12 alkoxy)carbonyl groups.

Examples of the ester compound include those shown below. Shown in parentheses are vapor pressures at 25°C by Donovan method.
Diisodecyl phthalate (1.0 × 10⁻⁸ mmHg);
Di(2-ethylhexyl) phthalate (1.4 × 10⁻⁷ mmHg);
Diisodecyl adipate (2.4 × 10⁻⁷ mmHg);
Di(n-octyl) sebacate (2.1 × 10⁻⁸ mmHg);
Diisononyl adipate (6.2 × 10⁻⁸ mmHg);
Di(2-ethylhexyl) sebacate (2.1 × 10⁻⁸ mmHg);
Di(2-ethylhexyl) 1,10-decanedicarboxylate (5.4 × 10⁻⁹ mmHg);
Dioctyl adipate (4.0 × 10⁻⁷ mmHg);
Di(n-butyl) sebacate (2.7 × 10⁻⁶ mmHg);
Tri(n-butyl) O-acetylcitrate (1.3 × 10⁻⁶ mmHg);
Di(2-ethylhexyl) maleate (3.1 × 10⁻⁶ mmHg); and
Tri(2-ethylhexyl) trimellitate (1.6 × 10⁻¹⁰ mmHg).

One or more kinds of the ester compounds can be used. Also, a commercially available product containing one or more kinds of the ester compounds can be used. Examples of the commercially available product include 610A (manufactured by Taoka Chemical Co., Ltd., adipic acid ((C6, C8, C10 alkoxy) carbonyl group, 3.1 × 10⁻⁶ to 3.4 × 10⁻⁸ mmHg) .

In addition, in the control liquid of the present invention, among the above ester compounds, di (n-butyl) sebacate and dioctyl adipate are preferably used.

The content of the ester compound in the control liquid of the present invention is 0.01 to 5% by weight, preferably 0.01 to 3% by weight, more preferably 0.1 to 2% by weight, and particularly preferably 0.1 to 0.7% by weight, based on the entire amount of the control liquid of the present invention.

Examples of the glycol ether used in the control liquid of the present invention include ethylene glycol-based ethers, propylene glycol-based ethers, and dialkyl glycol-based ethers.

Examples of the ethylene glycol-based ether include glycol ethers represented by the following formula (2):

**R⁴O-[CH₂CH₂O]ₙ-H** (2)

wherein R⁴ represents a methyl group, an isopropyl group, a butyl group, an isobutyl group, a hexyl group, an 2-ethylhexyl group, an allyl group, a phenyl group or a benzyl group, and n represents any integer of 1 to 10.

Specific examples include ethylene glycol monomethyl ether, diethylene glycol monomethyl ether, triethylene glycol monomethyl ether, ethylene glycol monoisopropyl ether, diethylene glycol monopropyl ether, diethylene glycol monoisopropyl ether, ethylene glycol monobutyl ether, diethylene glycol monobutyl ether, triethylene glycol monobutyl ether, ethylene glycol monoisobutyl ether, diethylene glycol monoisobutyl ether, and ethylene glycol monoallyl ether.

Examples of the propylene glycol-based ether include glycol ethers represented by the following formula (3):

**R⁵O-[CH₂CH(CH₃)O]ₘ-H** (3)

wherein R⁵ represents a methyl group, a propyl group, a butyl group, a phenyl group or an allyl group, and m is any integer of 1 to 3.

Specific examples include propylene glycol monomethyl ether, dipropylene glycol monomethyl ether, tripropylene glycol monomethyl ether, tripropylene glycol monopropyl ether, propylene glycol monopropyl ether, dipropylene glycol monopropyl ether, propylene glycol monobutyl ether, dipropylene glycol monobutyl ether, propylene glycol monoallyl ether, propylene glycol monoethyl ether, and dipropylene glycol monoethyl ether.

Examples of the dialkyl glycol-based ether include glycol ethers represented by the following formula (4):

**R⁶O-[CH₂CH₂O]ₘ-R⁷** (4)

wherein R⁶ and R⁷ are the same or different, and represent a methyl group, an ethyl group or a butyl group, and m has the same meaning as defined above.

Specific examples include ethylene glycol dimethyl ether, diethylene glycol dimethyl ether, triethylene glycol dimethyl ether, diethylene glycol methyl ethyl ether, and diethylene glycol diethyl ether.

In the control liquid of the present invention, an ethylene glycol-based ether or a propylene glycol-based ether is preferably used, from the viewpoint of stability of the control liquid. Also, from the viewpoint of solubility with the pyrethroid compound, the ester compound and water, among the ethylene glycol-based ethers, ethylene glycol monobutyl ether and diethylene glycol monobutyl ether are preferably used, and among the propylene glycol-based ethers, propylene glycol monomethyl ether, propylene glycol monoethyl ether, propylene glycol monopropyl ether, dipropylene glycol monopropyl ether and tripropylene glycol monopropyl ether are preferably used.

In the control liquid of the present invention, one or more kinds of the glycol ethers can be used.

The content of the glycol ether in the control liquid of the present invention is 10 to 60% by weight, preferably 10 to 50% by weight, and further preferably 15 to 40% by weight, based on the entire amount of the control liquid of the present invention.

The content of water in the control liquid of the present invention is 30 to 85% by weight, preferably 40 to 85% by weight, further preferably 50 to 70% by weight, and particularly preferably 50 to 60% by weight, based on the entire amount of the control liquid of the present invention.

The control liquid of the present invention can further contain a glycol. It is preferable that the control liquid of the present invention contains a glycol because the glycol can keep the solution of the control liquid stable.

Examples of the glycol used in the control liquid of the present invention include ethylene glycol, diethylene glycol, triethylene glycol, propylene glycol, dipropylene glycol, 1,3-butylene glycol, polyethylene glycol, tripropylene glycol, tetraethylene glycol, tetrapropylene glycol, and polypropylene glycol. From the viewpoint of solution stability, ethylene glycol, diethylene glycol, triethylene glycol, propylene glycol, dipropylene glycol and tripropylene glycol are preferably used, and triethylene glycol, propylene glycol, dipropylene glycol and tripropylene glycol are further preferably used.

When the control liquid of the present invention contains a glycol, the total content of the glycol is usually 1 to 45% by weight, preferably 3 to 40% by weight, more preferably 5 to 30% by weight, and further preferably 5 to 20% by weight, based on the entire amount of the control liquid of the present invention.

In the control liquid of the present invention, one or more kinds of the glycols can be used.

The control liquid of the present invention may include only a pyrethroid compound represented by formula (1), an ester compound, a glycol ether and water, or a pyrethroid compound represented by formula (1), an ester compound, a glycol ether, water and a glycol, and may also contain an antioxidant such as a phenolic antioxidant such as 2, 6-di-t-butyl-4-methylphenol, an ultraviolet absorber such as a benzophenone-based ultraviolet absorber and a benzotriazole-based ultraviolet absorber, and the like as needed.

The control liquid of the present invention can contain one or more kinds of other insecticidal active ingredients, miticidal active ingredients, repellent active ingredients and synergists.

Examples of the synergists include piperonyl butoxide, sesamex, sulfoxide, N-(2-ethylhexyl)-8,9,10-trinorborn-5-en-2,3-dicarboximide (MGK 264), N-declyimidazole, WARF-antiresistant, TBPT (S,S,S-tributyl phosphorotrithioate), TPP (triphenyl phosphate), IBP (diisopropyl S-benzyl phosphorothiolate), PSCP (phenyl saligenin cyclic phosphonate), methyl iodide (CH₃I), t-phenylbutenone, diethylmaleate, DMC (1,1-bis-(p-chlorophenyl)methyl carbinol), FDMC (bis-(p-chlorophenyl)-trifluoromethyl carbinol), ETP (1,1,1-trichloro-2,3-expoxypropane), ETN (1,2-epoxy-1,2,3,4-tetrahydronapthalene) and d-limonene.

The method for controlling pests of the present invention can have an excellent effect by applying the control liquid of the present invention, for example, to a heat transpiration type insecticidal apparatus described in JP-B-H2-25885.

Fig. 1 shows an example of the apparatus used in the method for controlling pests of the present invention. A part of liquid-absorbing wick 3 is immersed in pest control liquid 1, the pest control liquid 1 is absorbed in the liquid-absorbing wick 3, and the upper part of the liquid-absorbing wick 3 is made so that it can be heated with heater 2. The upper part of the liquid-absorbing wick 3 is indirectly heated to a temperature of about 60 to 135°C with the heater 2, whereby the pest control liquid 1 absorbed in the liquid-absorbing wick 3 can be vaporized into the atmosphere to control pests.

The liquid-absorbing wick generally includes a porous material. As the porous material, for example, inorganic powders such as clay, talc, kaolin, diatomaceous earth, gypsum, perlite, bentonite, acid clay, glass fiber and asbestos, which are shaped by binding with pastes such as carboxymethylcellulose, starch, gum arabic, gelatin and polyvinyl alcohol; inorganic substances such as clay, talc, bentonite, alumina and silica which are fixed to form a wick and then burnt; resins which are shaped/modified to form a wick; and glass fibers or the like which are tied together, can be used.

Examples of pests to be controlled in the method for controlling pests of the present invention include arthropods such as various harmful insects and mites, and particularly, harmful flying pests, for example, Diptera pests such as Culex spp. such as Culex pipiens pallens, Culex tritaeniorhynchus, Culex quinquefasciatus and Culex pipiens molestus; Aedes spp. such as Aedes aegypti and Aedes albopictus; Anopheles spp. such as Anopheles sinensis; Chironomidae; Muscidae such as Musca domestica, Muscina stabulans and Fannia canicularis; Calliphoridae; Sarcophagidae; Drosophilidae; Psychodidae; Phoridae; Tabanidae; Simuliidae; Culicoides; Ceratopogonidae; etc. are preferable. Pests to be controlled may include insecticide resistant pests in which the susceptibility to pyrethroid-based insecticidal active ingredients has been decreased.

### [Examples]

Hereinbelow, the present invention will be further described in detail by production examples, test examples, and the like. However, the present invention is not limited to these examples.

First, production examples of aqueous pest control liquid will be shown. The part(s) means part(s) by weight.

### Production Example 1

0.29 Parts of [2,3,5,6-tetrafluoro-4-(methoxymethyl)phenyl]methyl=2,2-dim ethyl-3-(1-propenyl)cyclopropane carboxylate (hereinafter referred to as pyrethroid compound A), 0.70 parts of di (n-butyl) sebacate, 39.01 parts of propylene glycol monopropyl ether and 10 parts of dipropylene glycol were mixed and stirred, then 50 parts of water was added thereto, and the mixture was further stirred to produce 100 parts of aqueous pest control liquid (1) .

### Production Example 2

0.29 Parts of the pyrethroid compound A, 0.50 parts of di (n-butyl) sebacate, 29.21 parts of propylene glycol monopropyl ether and 20 parts of dipropylene glycol were mixed and stirred, then 50 parts of water was added thereto, and the mixture was further stirred to produce 100 parts of aqueous pest control liquid (2).

### Production Example 3

0.29 Parts of the pyrethroid compound A, 0.30 parts of dioctyladipate, 39.41 parts of propylene glycol monopropyl ether and 10 parts of dipropylene glycol were mixed and stirred, then 50 parts of water was added thereto, and the mixture was further stirred to produce 100 parts of aqueous pest control liquid (3) . Production Example 4

0.30 Parts of [2,3,5,6-tetrafluoro-4-(methoxymethyl)phenyl]methyl=3-(3,3, 3-trifluoro-1-propenyl)-2,2-dimethylcyclopropane carboxylate, 0.20 parts of di (n-butyl) sebacate and 49.50 parts of diethylene glycol monobutyl ether were mixed and stirred, then 50 parts of water was added thereto, and the mixture was further stirred to produce 100 parts of aqueous pest control liquid (4).

### Production Example 5

0.30 Parts of [2,3,5,6-tetrafluoro-4-(methoxymethyl)phenyl]methyl=2,2-dim ethyl-3-(2-methyl-1-propenyl)cyclopropane carboxylate, 0.10 parts of diisononyl adipate, 29.6 parts of propylene glycol monopropyl ether and 20 parts of dipropylene glycol were mixed and stirred, then 50 parts of water was added thereto, and the mixture was further stirred to produce 100 parts of aqueous pest control liquid (5).

### Production Example 6

0.30 Parts of (2,3,5,6-tetrafluorophenyl)methyl=3-(2,2-dichlorovinyl)-2,2 -dimethylcyclopropane carboxylate, 0.30 parts of dioctyl adipate, 39.40 parts of propylene glycol monopropyl ether and 10 parts of dipropylene glycol were mixed and stirred, then 50 parts of water was added thereto, and the mixture was further stirred to produce 100 parts of aqueous pest control liquid (6) .

### Production Example 7

0.18 Parts of [2,3,5,6-tetrafluoro-4-(methoxymethyl)phenyl]methyl=3-(2,2-dichlorovinyl)-2,2-dimethylcyclopropane carboxylate, 0.10 parts of di(n-butyl) sebacate and 49.72 parts of diethylene glycol monobutyl ether were mixed and stirred, then 50 parts of water was added thereto, and the mixture was further stirred to produce 100 parts of aqueous pest control liquid (7).

### Production Example 8

1.0 Part of the pyrethroid compound A, 0.10 parts of diisononyl adipate, 38.9 parts of propylene glycol monopropyl ether and 10 parts of propylene glycol were mixed and stirred, then 50 parts of water was added thereto, and the mixture was further stirred to produce 100 parts of aqueous pest control liquid (8).

### Production Example 9

0.29 Parts of the pyrethroid compound A, 0.20 parts of tri (2-ethylhexyl) trimellitate, 39.51 parts of propylene glycol monopropyl ether and 10 parts of dipropylene glycol were mixed and stirred, then 50 parts of water was added thereto, and the mixture was further stirred to produce 100 parts of aqueous pest control liquid (9).

### Production Example 10

0.29 Parts of the pyrethroid compound A, 0.20 parts of dioctyl adipate and 49.51 parts of diethylene glycol monobutyl ether were mixed and stirred, then 50 parts of water was added thereto, and the mixture was further stirred to produce 100 parts of aqueous pest control liquid (10).

### Production Example 11

0.60 Parts of [2,3,5,6-tetrafluoro-4-(methoxymethyl)phenyl]methyl=2,2-dim ethyl-3-(2-methyl-1-propenyl)cyclopropane carboxylate, 0.025 parts of diisononyl adipate, 29.375 parts of propylene glycol monopropyl ether and 10 parts of dipropylene glycol were mixed and stirred, then 60 parts of water was added thereto, and the mixture was further stirred to produce 100 parts of aqueous pest control liquid (11).

### Comparative Production Example 1

0.29 Parts of the pyrethroid compound A, 39.71 parts of propylene glycol monopropyl ether and 10 parts of dipropylene glycol were mixed and stirred, then 50 parts of water was added thereto, and the mixture was further stirred to produce 100 parts of comparative aqueous pest control liquid (1).

### Comparative Production Example 2

0.29 Parts of the pyrethroid compound A and 49.71 parts of diethylene glycol monobutyl ether were mixed and stirred, then 50 parts of water was added thereto, and the mixture was further stirred to produce 100 parts of comparative aqueous pest control liquid (2).

### Test Example 1

45 g of the aqueous pest control liquid (1) produced in Production Example 1 was put into a container, and a liquid-absorbing wick was attached to the container to prepare a liquid-absorbing wick-attached bottle containing the aqueous pest control liquid (1). The bottle was set to the heat transpiration type insecticidal apparatus of Fig. 1, and heated. The heating procedure was carried out by continuously heating for 8 hours and then stopping the heating for 4 hours, and this procedure was repeated as one cycle. In specific cycles from the heating start to 63 cycles, the vaporized amount of the pyrethroid compound for 1 hour in 7 to 8 hours after the heating start was measured. The same test was performed each using the aqueous pest control liquid (2) to (11), the comparative aqueous pest control liquid (1) or the comparative aqueous pest control liquid (2), in place of the aqueous pest control liquid (1), to measure the vaporized amount of the pyrethroid compound.

In order to compare vaporization behavior of the pyrethroid compounds in the aqueous pest control liquids of the present invention and the comparative aqueous pest control liquid, the dissipation time of the aqueous pest control liquid when used in the heat transpiration type insecticidal apparatus needs to be equivalent. The ester compound of the present invention also has an effect of adjusting the consumption rate of the aqueous pest control liquid, thus when the aqueous pest control liquids (1) to (11) are used in the heat transpiration type insecticidal apparatus in combination with a liquid-absorbing wick with a diameter of 7.0 mm, the pest control liquid dissipates at about 400 to 500 hours by the total usage time. It is adjusted so that the comparative aqueous pest control liquid (1) is used in combination with a liquid-absorbing wick with a diameter of 5.5 mm, whereby the aqueous pest control liquid dissipates at about 400 to 500 hours by the total usage time. Also, it is adjusted so that the comparative aqueous pest control liquid (2) is used in combination with a liquid-absorbing wick with a diameter of 6.5 mm, whereby the aqueous pest control liquid dissipates at about 400 to 500 hours by the total usage time.

In addition, the vaporized amount of the pyrethroid compound was calculated by sequentially collecting the vaporized present compound with a glass column filled with a polyurethane sponge as an adsorbent, and then extracting the polyurethane sponge with acetone to analyze the amount of the pyrethroid compound on gas chromatograph.

The result is shown in Table 1.

**[Table 1]**

| | Vaporized amount of pyrethroid compound per hour (mg) | | | | | |
|---|---|---|---|---|---|---|
| | 1st cycle | 28th cycle | 30th cycle | 40th cycle | 42nd cycle | 48th cycle |
| Aqueous pest control liquid (1) | 0.21 | | 0.26 | | | |
| Aqueous pest control liquid (2) | 0.36 | 0.23 | | | | 0.28 |
| Aqueous pest control liquid (3) | 0.22 | | 0.26 | | | |
| Aqueous pest control liquid (4) | 0.25 | | | | 0.40 | |
| Aqueous pest control liquid (5) | 0.23 | | 0.25 | | | |
| Aqueous pest control liquid (6) | 0.30 | | 0.19 | | | |
| Aqueous pest control liquid (7) | 0.11 | | | | 0.14 | |
| Aqueous pest control liquid (8) | 0.52 | | 1.1 | | | |
| Aqueous pest control liquid (9) | 0.37 | | | | 0.13 | |
| Aqueous pest control liquid (10) | 0.28 | | | | 0.21 | |
| Aqueous pest control liquid (11) | 0.49 | | | 0.20 | | |
| Comparative aqueous pest control liquid (1) | 0.31 | 0.25 | | | 0.13 | |
| Comparative aqueous pest control liquid (2) | 0.49 | | | | 0.27 | |

**[Table 2]**

| | Vaporized amount of pyrethroid compound per hour (mg) | | | | | |
|---|---|---|---|---|---|---|
| | 50th cycle | 52nd cycle | 54th cycle | 55th cycle | 58th cycle | 63rd cycle |
| Aqueous pest control liquid (1) | 0.12 | | | | | |
| Aqueous pest control liquid (2) | | | 0.2 | | | |
| Aqueous pest control liquid (3) | 0.15 | | | | 0.27 | |
| Aqueous pest control liquid (4) | | 0.42 | | | | |
| Aqueous pest control liquid (5) | 0.17 | | | | | |
| Aqueous pest control liquid (6) | 0.17 | | | | | |
| Aqueous pest control liquid (7) | | | | 0.14 | | |
| Aqueous pest control liquid (8) | 0.12 | | | | | |
| Aqueous pest control liquid (9) | 0.11 | | | | | |
| Aqueous pest control liquid (10) | 0.20 | | | | | |
| Aqueous pest control liquid (11) | 0.14 | | | | | |
| Comparative aqueous pest control liquid (1) | 0.06 | | | | | 0.01 |
| Comparative aqueous pest control liquid (2) | | 0.03 | | | | |

The aqueous pest control liquids (1) to (11) of the present invention could vaporize 0.1 mg or more of the pyrethroid compound per hour, more than 50 cycles.

### Test Example 2

45 g of the aqueous pest control liquid (1) was put into a container, and a liquid-absorbing wick was attached to the container to prepare a liquid-absorbing wick-attached bottle containing the aqueous pest control liquid (1). The bottle was set to the heat transpiration type insecticidal apparatus of Fig. 1, and heated. The heating procedure was carried out by continuously heating for 8 hours and then stopping the heating for 4 hours, and this procedure was repeated as one cycle. The heating procedure was continued from the heating start to 49th cycle, and then, at the point in time when the heating time reached 7 hours in the 50th cycle, the bottle attached heat transpiration type insecticidal apparatus was placed on the center of the floor in the testing room (rectangular parallelepiped of 3. 0 m × 4. 0m×2. 3m, 28m³). Immediately after placing the bottle attached heat transpiration type insecticidal apparatus, about 100 common house mosquitoes (Culex pipiens pallens, female adult) were released in the room. After releasing insects, the knocked-down common house mosquitoes were counted at regular time intervals, and based on such data, KT₅₀ (time required for knocking-down 50% of the testing insects) was calculated. The same test was performed each using the aqueous pest control liquid (2), the aqueous pest control liquid (3) or the comparative aqueous pest control liquid (1) in place of the aqueous pest control liquid (1) to calculate KT₅₀.

The result is shown in Table 2.

**[Table 3]**

| | KT₅₀ (min) |
|---|---|
| Aqueous pest control liquid (1) | 48.0 |
| Aqueous pest control liquid (2) | 41.3 |
| Aqueous pest control liquid (3) | 34.7 |
| Comparative aqueous pest control liquid (1) | >60 |

The aqueous pest control liquids (1) to (3) of the present invention showed quick knock-down effect compared with the comparative aqueous pest control liquid (1) in the 50th cycle.

As described above, the control liquid of the present invention could stably control pests for a long period of time, 50 days or more, assuming that the practical usage time of one day is 8 hours.

### [Industrial Applicability]

The control liquid of the present invention can volatilize a fixed amount of pest control component for a long period of time, thus has an excellent pest control effect.

### [Description Of The Reference Numerals]

- 1:: A pest control liquid for heat transpiration
- 2:: A heater
- 3:: A liquid-absorbing wick
- 4:: A container containing a test liquid

## Claims

1. An aqueous pest control liquid comprising a pyrethroid compound represented by formula (1), 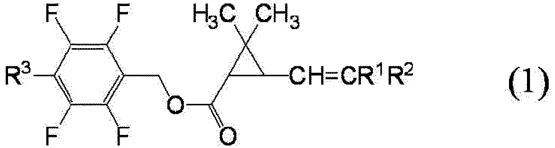 wherein R¹ and R² are the same or different and represent a hydrogen atom, a methyl group, a trifluoromethyl group or a chlorine atom, and R³ represents a hydrogen atom, a methyl group or a methoxymethyl group,
an ester compound having a vapor pressure at 25°C by Donovan method of 1 × 10⁻¹⁰ to 1 × 10⁻⁴ mmHg and one or more (C4-C12 alkoxy)carbonyl groups, a glycol ether and water,
wherein the content of the pyrethroid compound represented by formula (1) is 0.01 to 5% by weight based on the entire aqueous pest control liquid, the content of the ester compound having a vapor pressure at 25°C by Donovan method of 1 × 10⁻¹⁰ to 1 × 10⁻⁴ mmHg and one or more (C4-C12 alkoxy) carbonyl groups is 0.01 to 5% by weight based on the entire aqueous pest control liquid, the content of the glycol ether is 10 to 60% by weight based on the entire aqueous pest control liquid, and the content of water is 30 to 85% by weight based on the entire aqueous pest control liquid.

2. The aqueous pest control liquid according to claim 1, wherein the content of the pyrethroid compound represented by formula (1) is 0.01 to 5% by weight based on the entire aqueous pest control liquid, the content of the ester compound having a vapor pressure at 25°C by Donovan method of 1 × 10⁻¹⁰ to 1 × 10⁻⁴ mmHg and one or more (C4-C12 alkoxy) carbonyl groups is 0.01 to 5% by weight based on the entire aqueous pest control liquid, the content of the glycol ether is 10 to 50% by weight based on the entire aqueous pest control liquid, and the content of water is 40 to 85% by weight based on the entire aqueous pest control liquid.

3. The aqueous pest control liquid according to any one of claims 1 to 2, wherein the ester compound having a vapor pressure at 25°C by Donovan method of 1 × 10⁻¹⁰ to 1 × 10⁻⁴ mmHg and one or more (C4-C12 alkoxy)carbonyl groups is one or more kinds selected from the group consisting of diisodecyl phthalate, di(2-ethylhexyl) phthalate, diisodecyl adipate, di(n-octyl) sebacate, diisononyl adipate, di(2-ethylhexyl) sebacate, di(2-ethylhexyl) 1,10-decanedicarboxylate, dioctyl adipate, di(n-butyl) sebacate, tri(n-butyl) O-acetylcitrate, di(2-ethylhexyl) maleate, and tri(2-ethylhexyl) trimellitate.

4. The aqueous pest control liquid according to any one of claims 1 to 3, wherein the glycol ether is one or more kinds selected from the group consisting of ethylene glycol monobutyl ether, diethylene glycol monobutyl ether, propylene glycol monomethyl ether, propylene glycol monoethyl ether, dipropylene glycol monopropyl ether, tripropylene glycol monopropyl ether, and propylene glycol monopropyl ether.

5. The aqueous pest control liquid according to any one of claims 1 to 4, further containing a glycol, wherein the glycol is one or more kinds selected from the group consisting of ethylene glycol, diethyleneglycol, triethyleneglycol, propylene glycol, dipropylene glycol, 1,3-butylene glycol, polyethylene glycol, tripropylene glycol, tetraethylene glycol, tetrapropylene glycol and polypropylene glycol, and the content of the glycol is 1 to 45% by weight based on the entire aqueous pest control liquid.

6. The aqueous pest control liquid according to any one of claims 1 to 5, wherein the pyrethroid compound represented by formula (1) is one or more kinds selected from the group consisting of
[2,3,5,6-tetrafluoro-4-(methoxymethyl)phenyl]methyl=2,2-dim ethyl-3-(1-propenyl)cyclopropane carboxylate,
[2,3,5,6-tetrafluoro-4-methylphenyl]methyl=2,2-dimethyl-3-( 1-propenyl)cyclopropane carboxylate,
(2,3,5,6-tetrafluorophenyl)methyl=3-(2,2-dichlorovinyl)-2,2 -dimethylcyclopropane carboxylate,
[2,3,5,6-tetrafluoro-4-(methoxymethyl)phenyl]methyl=3-(2,2-dichlorovinyl)-2,2-dimethylcyclopropane carboxylate,
[2,3,5,6-tetrafluoro-4-(methoxymethyl)phenyl]methyl=2,2-dim ethyl-3-(2-methyl-1-propenyl)cyclopropane carboxylate, and
[2,3,5,6-tetrafluoro-4-(methoxymethyl)phenyl]methyl=3-(3,3, 3-trifluoro-1-propenyl)-2,2-dimethylcyclopropane carboxylate.

7. A method for controlling pests which comprises vaporizing the aqueous pest control liquid as defined in any one of claims 1 to 6 into the atmosphere by heating.

8. Use of the aqueous pest control liquid as defined in any one of claims 1 to 6 for controlling pests.

## Patentansprüche

1. Wässrige Schädlingsbekämpfungsflüssigkeit, eine Pyrethroidverbindung umfassend, die durch Formel (1) dargestellt ist, 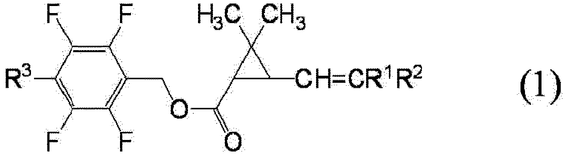
wobei R¹ und R² gleich oder unterschiedlich sind und ein Wasserstoffatom, eine Methylgruppe, eine Trifluormethylgruppe oder ein Chloratom darstellen und R³ ein Wasserstoffatom, eine Methylgruppe oder eine Methoxymethylgruppe darstellt,
eine Esterverbindung, die bei 25 °C nach dem Donovanverfahren einen Dampfdruck von 1 × 10⁻¹⁰ bis 1 × 10⁻⁴ mmHg und eine oder mehrere (C4-C12-Alkoxy)carbonylgruppen aufweist, einen Glycolether und Wasser,
wobei der Gehalt der Pyrethroidverbindung, die durch Formel (1) dargestellt ist, 0,01 bis 5 Gew.-%, bezogen auf die gesamte wässrige Schädlingsbekämpfungsflüssigkeit, beträgt, der Gehalt der Esterverbindung, die bei 25 °C nach dem Donovanverfahren einen Dampfdruck von 1 × 10⁻¹⁰ bis 1 × 10⁻⁴ mmHg und eine oder mehrere (C4-C12-Alkoxy)carbonylgruppen aufweist, 0,01 bis 5 Gew.-%, bezogen auf die gesamte wässrige Schädlingsbekämpfungsflüssigkeit, beträgt, der Gehalt des Glycolethers 10 bis 60 Gew.-%, bezogen auf die gesamte wässrige Schädlingsbekämpfungsflüssigkeit, beträgt und der Gehalt von Wasser 30 bis 85 Gew.-%, bezogen auf die gesamte wässrige Schädlingsbekämpfungsflüssigkeit, beträgt.

2. Wässrige Schädlingsbekämpfungsflüssigkeit nach Anspruch 1, wobei der Gehalt der Pyrethroidverbindung, die durch Formel (1) dargestellt ist, 0,01 bis 5 Gew.-%, bezogen auf die gesamte wässrige Schädlingsbekämpfungsflüssigkeit, beträgt, der Gehalt der Esterverbindung, die bei 25 °C nach dem Donovanverfahren einen Dampfdruck von 1 × 10⁻¹⁰ bis 1 × 10⁻⁴ mmHg und eine oder mehrere (C4-C12-Alkoxy)carbonylgruppen aufweist, 0,01 bis 5 Gew.-%, bezogen auf die gesamte wässrige Schädlingsbekämpfungsflüssigkeit, beträgt, der Gehalt des Glycolethers, 10 bis 50 Gew.- %, bezogen auf die gesamte wässrige Schädlingsbekämpfungsflüssigkeit, beträgt und der Gehalt von Wasser 40 bis 85 Gew.-%, bezogen auf die gesamte wässrige Schädlingsbekämpfungsflüssigkeit, beträgt.

3. Wässrige Schädlingsbekämpfungsflüssigkeit nach einem der Ansprüche 1 bis 2, wobei die Esterverbindung, die bei 25 °C nach dem Donovanverfahren einen Dampfdruck von 1 × 10⁻¹⁰ bis 1 × 10⁻⁴ mmHg und eine oder mehrere (C4-C12-Alkoxy)carbonylgruppen aufweist, eine oder mehrere Arten ist, die aus der Gruppe ausgewählt sind, die aus Diisodecylphthalat, Di(2-Ethylhexyl)phthalat, Diisodecyladipat, Di(n-Octyl)sebacat, Diisononyladipat, Di(2-Ethylhexyl)sebacat, Di(2-Ethylhexyl)1,10-decandicarboxylat, Dioctyladipat, Di(n-butyl)sebactat, Tri(n-butyl)O-acetylcitrat, Di(2-Ethylhexyl)maleat und Tri(2-Ethylhexyl)trimellitat besteht.

4. Wässrige Schädlingsbekämpfungsflüssigkeit nach einem der Ansprüche 1 bis 3, wobei der Glycolether eine oder mehrere Arten ist, die aus der Gruppe ausgewählt sind, die aus Ethylenglycolmonobutylether, Diethylenglycolmonobutylether, Propylenglycolmonometylether, Propylenglycolmonoethylether, Dipropylenglycolmonopropylether, Tripropylenglycolmonopropylether und Propylenglycolmonopropylether besteht.

5. Wässrige Schädlingsbekämpfungsflüssigkeit nach einem der Ansprüche 1 bis 4, ferner ein Glycol enthaltend, wobei das Glycol eine oder mehrere Arten ist, die aus der Gruppe ausgewählt sind, die aus Ethylenglycol, Diethylenglycol, Triethylenglycol, Propylenglycol, Diepropylenglycol, 1,3-Butylenglycol, Polyethylenglycol, Tripropylenglycol, Tetraethylenglycol, Tetrapropylenglycol und Polypropylenglycol besteht, und der Gehalt des Glycols 1 bis 45 Gew.-%, bezogen auf die gesamte wässrige Schädlingsbekämpfungsflüssigkeit, beträgt.

6. Wässrige Schädlingsbekämpfungsflüssigkeit nach einem der Ansprüche 1 bis 5, wobei die Pyrethroidverbindung, die durch Formel (1) dargestellt ist, eine oder mehrere Arten ist, die aus der Gruppe ausgewählt sind, die aus folgenden Verbindungen besteht:
[2,3,5,6-Tetrafluor-4-methoxymethyl)phenyl]methyl=2,2-dimethyl-3-(1-propenyl)cyclopropancarboxylat,
[2,3,5,6-Tetrafluor-4-methylphenyl]methyl=2,2-dimethyl-3-(1-propenyl)cyclopropancarboxylat,
(2,3,5,6-Tetrafluorphenyl)methyl=3-(2,2-dichlorvinyl-2,2-dimethylcyclopropancarboxylat,
[2,3,5,6-Tetrafluor-4-methoxymethyl)phenyl]methyl=3-(2,2-dichlorvinyl)-2,2-dimethylcyclopropancarboxylat,
[2,3,5,6-Tetrafluor-4-(methoxymethyl)phenyl]methyl=2,2-dimethyl-3-(2-methyl-1-propenyl)cyclopropancarboxylat, und
[2,3,5,6-Tetrafluor-4-(methoxymethyl)phenyl]methyl=3-(3,3,3-trifluor-1-propenyl)-2,2-dimethylcyclopropancarboxylat.

7. Verfahren zur Bekämpfung von Schädlingen, welches das Verdampfen der wässrigen Schädlingsbekämpfungsflüssigkeit nach einem der Ansprüche 1 bis 6 in die Umgebung durch Erwärmen umfasst.

8. Verwendung der wässrigen Schädlingsbekämpfungsflüssigkeit nach einem der Ansprüche 1 bis 6 zur Bekämpfung von Schädlingen.

## Revendications

1. Liquide anti-parasitaire aqueux comprenant un composé pyréthrinoïde représenté par la formule (1), 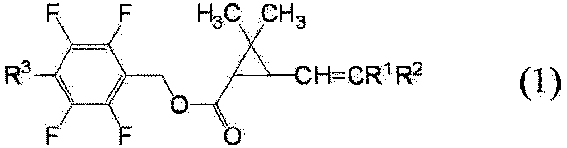
dans laquelle R¹ et R² sont identiques ou différents et représentent un atome d'hydrogène, un groupe méthyle, un groupe trifluorométhyle ou un atome de chlore, et R³ représente un atome d'hydrogène, un groupe méthyle ou un groupe méthoxyméthyle,
un composé ester présentant une pression de vapeur à 25 °C par la méthode de Donovan de 1 × 10⁻¹⁰ à 1 × 10⁻⁴ mm Hg et un ou plusieurs groupes (C4-C12 alkoxy)carbonyle, un éther de glycol et de l'eau,
dans lequel la teneur du composé pyréthrinoïde représenté par la formule (1) est de 0,01 à 5 % en poids rapporté au liquide anti-parasitaire aqueux total, la teneur du composé ester présentant une pression de vapeur à 25 °C par la méthode de Donovan de 1 × 10⁻¹⁰ à 1 × 10⁻⁴ mm Hg et un ou plusieurs groupes (C4-C12 alkoxy)carbonyle est de 0,01 à 5 % en poids rapporté au liquide anti-parasitaire aqueux total, la teneur de l'éther de glycol est de 10 à 60 % en poids rapporté au liquide anti-parasitaire aqueux total, et la teneur en eau est de 30 à 85 % en poids rapporté au liquide anti-parasitaire aqueux total.

2. Liquide anti-parasitaire aqueux selon la revendication 1, dans lequel la teneur du composé pyréthrinoïde représenté par la formule (1) est de 0,01 à 5 % en poids rapporté au liquide anti-parasitaire aqueux total, la teneur du composé ester présentant une pression de vapeur à 25 °C par la méthode de Donovan de 1 × 10⁻¹⁰ à 1 × 10⁻⁴ mm Hg et un ou plusieurs groupes (C4-C12 alkoxy)carbonyle est de 0,01 à 5 % en poids rapporté au liquide anti-parasitaire aqueux total, la teneur de l'éther de glycol est de 10 à 50 % en poids rapporté au liquide anti-parasitaire aqueux total, et la teneur en eau est de 40 à 85 % en poids rapporté au liquide anti-parasitaire aqueux total.

3. Liquide anti-parasitaire aqueux selon l'une quelconque des revendications 1 à 2, dans lequel le composé ester présentant une pression de vapeur à 25 °C par la méthode de Donovan de 1 × 10⁻¹⁰ à 1 × 10⁻⁴ mm Hg et un ou plusieurs groupes (C4-C12 alkoxy)carbonyle est une ou plusieurs espèces sélectionnées parmi le groupe constitué par le phtalate de diisodécyle, le phtalate de di(2-éthylhexyle), l'adipate de diisodécyle, le sébacate de di(n-octyle), l'adipate de diisononyle, le sébacate de di(2-éthylhexyle), le 1,10-décanedicarboxylate de di(2-éthylhexyle), l'adipate de dioctyle, le sébacate de di(n-butyle), l'O-acétylcitrate de tri(n-butyle), le maléate de di(2-éthylhexyle) et le trimellitate de tri(2-éthylhexyle).

4. Liquide anti-parasitaire aqueux selon l'une quelconque des revendications 1 à 3, dans lequel l'éther de glycol est une ou plusieurs espèces sélectionnées parmi le groupe constitué par l'éther monobutylique de l'éthylène glycol, l'éther monobutylique du diéthylène glycol, l'éther monométhylique du propylène glycol, l'éther monoéthylique du propylène glycol, l'éther monopropylique du dipropylène glycol, l'éther monopropylique du tripropylène glycol et l'éther monopropylique du propylène glycol.

5. Liquide anti-parasitaire aqueux selon l'une quelconque des revendications 1 à 4, contenant en outre un glycol, dans lequel le glycol est une ou plusieurs espèces sélectionnées dans le groupe constitué par l'éthylène glycol, le diéthylène glycol, le triéthylène glycol, le propylène glycol, le dipropylène glycol, le 1,3-butylène glycol, le polyéthylène glycol, le tripropylène glycol, le tétraéthylène glycol, le tétrapropylène glycol et le polypropylène glycol, et la teneur du glycol est de 1 à 45 % en poids rapporté au liquide anti-parasitaire aqueux total.

6. Liquide anti-parasitaire aqueux selon l'une quelconque des revendications 1 à 5, dans lequel le composé pyréthrinoïde représenté par la formule (1) est une ou plusieurs espèces sélectionnées parmi le groupe constitué par les composés suivants :
[2,3,5,6-tétrafluoro-4-(méthoxyméthyl)phényl]méthyl=2,2-diméthyl-3-(1-propényl)cyclopropane carboxylate,
[2,3,5,6-tétrafluoro-4-méthylphényl]méthyl=2,2-diméthyl-3-(1-propényl)cyclopropane carboxylate,
(2,3,5,6-tétrafluorophényl)méthyl=3-(2,2-dichlorovinyl)-2,2-diméthylcyclopropane carboxylate,
[2,3,5,6-tétrafluoro-4-(méthoxyméthyl)phényl]méthyl=3-(2,2-dichlorovinyl)-2,2-diméthylcyclopropane carboxylate,
[2,3,5,6-tétrafluoro-4-(méthoxyméthyl)phényl]méthyl=2,2-diméthyl-3-(2-méthyl-1-propényl)cyclopropane carboxylate, et
[2,3,5,6-tétrafluoro-4-(méthoxyméthyl)phényl]méthyl=3-(3,3,3-trifluoro-1-propényl)-2,2-diméthylcyclopropane carboxylate.

7. Procédé de lutte contre les parasites qui comprend la vaporisation du liquide aqueux anti-parasitaire selon l'une quelconque des revendications 1 à 6 dans l'atmosphère par chauffage.

8. Utilisation du liquide aqueux anti-parasitaire selon l'une quelconque des revendications 1 à 6 pour lutter contre les parasites.
